# EUROPEAN PATENT APPLICATION

(11) **EP 1 522 399 A2**
(43) Date of publication of application: **13.04.2005**
(21) Application number: 04028807.8
(22) Date of filing: 18.04.2000
(51) Int. Cl.: B29C 65/18

(54) **Apparatus for conjoining tubular end portions**

(30) Priority: 18.04.1999 US 295102; 18.04.1999 US 295103; 20.03.2000 US 528402
(62) Divisional of application: 00923412.1
(71) Applicant: Entegris, Inc., Chaska, Minnesota 55318 (US)
(72) Inventor: Johnson, Micheal W., Minneapolis Minnesota 55406 (US); McKenzie, Jeffrey J., Waterton Minnesota 55388 (US)
(74) Representative: Sparing - Röhl - Henseler Patentanwälte

(57) **Abstract**

A conduction welding apparatus, a mandrel, and method for bonding abutted thermal plastic tubular end portions (A,B) particularly suitable for welding PFA wherein a preferred embodiment, a folding weld head (224) embraces the abutted tubular end portions (A,B) to be welded, each tubular end portion including a flange spaced from the surfaces to be joined, the weld head including means for securing the flanges within the weld head (224) and further include bias means, the bias means providing an inward axial bias on the adjoined tubular end portions when the tubular end portions are displaced axially outward from the weld head due to the expansion of the plastic during the weld process, the bias means in a preferred embodiment being substantially inoperative prior to the weld and providing bias, or a substantial increase in bias, when the flanges are displaced due to the expansion of the molten PFA during the weld process, the mandrel comprising a first core portion (320) and a second tubing contact portion (322), the first core portion and the second tubing contact portion being longitudinally movable relative to each other between a first conjoining configuration and a second removal configuration.

## Description

### CROSS-REFERENCE TO RELATED APPLICATIONS

This application is related to application serial number 09/295,103 filed at the U.S. Patent and Trademark Office on the April 18, 1999, entitled "Beadless Welding Apparatus and Method," by inventors Michael W. Johnson and Jeffrey J. McKenzie (attorney docket number 22670-502), Beadless Welding Apparatus and Method filed March 20, 2000, at the U.S. Patent and Trademark Office, Serial No. 09/528,402, and Insert for Use in Conjoining Tubular End Portions filed April 18, 1999, at the U.S. Patent and Trademark Office, Serial No. 09/295,102. These applications are incorporated herein by this reference.

### BACKGROUND OF THE INVENTION

This invention relates to plastic tubing, and in particular an apparatus and method for joining ends of melt processable plastic tubing together to form a beadless weldment.

Plastic tubing assembly is generally achieved by the use of fittings and fixtures. This is acceptable for many applications, however, there are drawbacks to this form of assembly. When fittings are used to join two tubes together, for example, the interior surface of the assembled tubing is often left with spaces or gaps between the ends of the tubes and the fittings or the ends of the tubes opposing each other. In other words, the interior surface is not smooth. One problem is that particulates may accumulate or accrete in the gaps or spaces and serve as a source of chemical contamination for fluids passing thereby. The accumulated or accreted particulates may also break away from the gap to create a source of physical or mechanical contamination. Another problem with the use of fittings and fixtures is that volatile components of the bonding materials used in assembly may leach out and become a source of contamination. Additionally, the bond itself may adversely react with fluids transported in the tubes and/or may become unduly embrittled or weakened.
Another problem that arises is that the uneven interior surface may become a source of unwanted turbulence and flow resistance for fluid passing thereby. Such fittings are, of course, subject to leakage.

These drawbacks are of particular importance in industries where high levels of purity and cleanliness are necessary as in semi-conductor processing or required by law as in food processing.

These problems are alleviated by joining tubes to each other without the use of fittings. This is typically accomplished by welding, fusing, gluing or otherwise joining the tubes together. Concurrent with this shift in methods of assembly is the preferential use of plastic pipes and tubing of material such as perfluoroalkoxy (PFA) over the more traditional stainless steel which is, among other things, relatively hard to fabricate, expensive, and subject to corrosion.

Various means have been known for welding together the ends of thermoplastic pipes, see for example U.S. Patent No. 4,929,293 to Oscar, which utilizes the placement of an infrared heating platen in between and confronting the tubular end pieces to be joined. The infrared heating plate is removed and the tube joints are then engaged together to create the weld.

With this and other types of assembly, many of the disadvantages of using fittings are reduced or eliminated, resulting in less contamination.

There is a problem with these types of assembly, however, in that the seam or junction between tube ends is often not coincident with the interior surface of the conjoined tubes. That is, there may be a bead at the seam or junction which protrudes radially inwardly relative to the interior surface of the conjoined tube and/or there may be a bead at the seam or junction which protrudes radially outwardly relative to the interior surface of the conjoined tube. These beads, though relatively small, can also lead to contamination, turbulence and resistance as discussed above.

Various devices have been developed to reduce or eliminate the radially inwardly protruding seam or junction. These devices involve placing a temporary form or insert, generally termed ''mandrels'' in the interior of tube ends to be joined, joining the tube ends, typically in a contact/conduction weld head, and then removing the temporary insert or form. The temporary inserts or forms are usually positioned coincident with the interior surfaces and ends of the tubes to be conjoined so that any gaps therebetween are spanned by the insert. The inserts or forms are of sufficient strength to resist compressive forces incurred during the conjoining process. Some of the devices which have been developed include inflatable bladders, elastically deformable expanding plugs, soluble plugs, frangible plugs, and mechanically adjustable mandrels (see, for example U.S. Patent No. 5,484,506 to DuPont et al. and U.S. Patent No. 5,037,500 to Hilpert both of which disclose the use of radially expandable internal mandrels to allow engagement of the interior surface of the tubular end portions to be joined and then allow the mandrel to be radially retracted and removed from the tubing).

The inflatable bladder insert, for example, is usually longitudinally shaped and is designed to exert a radially extending outward force as it is pressurized. The bladder is not functional as an insert per-se and requires a source of working fluid, a delivery system, and a control system to enable the bladder to be filled and emptied to predetermined pressures. The requirement of such systems not only increases the complexity of the device, it necessarily restricts the number of locations where the device may be operated. Moreover, the bladder may be accidently punctured and lose its ability to be pressurized.

The elastically deformable expanding plugs do not suffer from the infirmities of the bladder, however, they do require specialized tools and fixtures to compress and elastically and radially deform a plug (or plugs) to an operable, supportive position within the tube ends. If the fixture breaks, or the interface between the specialized tools and the fixture becomes damages, the plug will be inoperable.

Soluble and frangible plugs are designed to be used once and must be destroyed in order to be removed. That is, removal is accomplished by absorption and/or erosion by a suitable fluid medium or fracturing, respectively. While these types of plugs are simple to use and do not require specialzed tools or fixtures, they have their drawbacks in that they are relatively brittle and may break due to mishandling or accident prior to use. And, they may become sources of contamination due to incomplete and/or ineffective removal after use and it can be time consuming to remove such plugs.

Mechanically adjustable mandrels are relatively complicated to fabricate and assemble. They usually comprise a plurality of radially moveable parts which are interconnected to each other by springs or similar retaining elements. Their construction permits a variety of different tube sizes to be conjoined.
Thus, one adjustable mandrel can replace a set of non-adjustable mandrels. This advantage is also a disadvantage in that the adjustable mandrel can come out of adjustment, or the radial parts may become aligned or lost. Moreover, because they must be adjusted each time they are used on different sized tubes, they create significant down time.

To the extent the above devices are commercially utilized, they generally are used with non-fluoropolymer plastics. Applicants are not aware of any conduction heat weld system that has peripheral contact with abutted tubular ends has been shown to be suitable for welding PFA. This is due to the difficulties associated with the higher melt temperatures of PFA (approximately 590 F) and the characteristics of PFA. For example, melted PFA sticks to many different materials that are commonly used in welding devices. Such sticking can render the completed weld defective and can cause significant operational problems with the weld equipment. Additionally, heating and melting of PFA produces fluorine gas which is highly corrosive to conventional materials utilized in fusion welding equipment. For example standard stainless steel quickly pits when exposed to fluorine gas. Additionally, PFA when melted expands and if constrained can develop extremely high pressures causing the PFA to leach out of the weld and into crevices or other undesired locations.

Also problematic with welding higher temperature melt processable plastics, such as PFA, is the extended cycle time for a weld. The typical generic steps for a weld are: 1) position the tubular end portions to be welded in the weld head; 2) close the weld head; 3) warm up the weld head and heater portion; 4) melt and weld the end portions; and 5) allow the welded part to cool; and 6) remove the welded component from the weld head. Conventional conduction heating heads utilize a pair of integral heater portions each of which extend longitudinally down the abutted tubular end portions and totally enclose the melt portion of the end portions. Such conventional weld portions are formed of stainless steel which has a relatively high thermal conductivity. This makes it difficult to isolate and minimize the melt zone which in turn effects the length of the cycle time. Moreover, in conventional weld beads and weld apparatus essentially all of the components are made of metal. This increases the warm-up period and the cool down period. With the elevated temperatures associated with PFA, these problems are exacerbated.

Attempts have been made to reduce the cycle time of welding thermoplastic tubular end portions such as by providing heat sink arrangements and forced cooling. The high thermal conductivity of metals and particularly stainless steel minimizes the effectiveness of such measures and ancillary cooling equipment adds cost, complexity, and maintenance problems.

A welding apparatus, system, and methodology are needed for creating beadless welds in plastic tubular end portions, particularly PFA, by conduction heating. Moreover, there is a need for reducing cycle time in welding thermoplastics.

When tubular end portion of PFA are heated to beyond their melt point a minimal, although significant, amount of expansion of the molten PFA material occurs. When the tubular end portions being welded are tightly constrained this expansion causes the molten PFA to leach into any crevices or imperfections in the weld head and/or mandrel. Moreover, if the tubular end portions are secured in place, after the weld is cooled, there will typically be a narrowing of the material at the weld site. This can cause an hourglass shape and/or a reduced wall thickness at the juncture. Where the PFA has leached into minute crevices or imperfections, flashing may exist on the exterior or interior surfaces of the tube when the weld has cooled and is removed from the weld head. These would typically necessitate manual removal and in severe cases may make the welded components unusable in particular applications. Thus, a need exists for minimizing or reducing the currents of flashing, the reduced diameter at the weld juncture due to the expansion and contraction of PFA during the weld operation.

There is a need for a tubing insert or form which is simple to manufacture, easy to install and remove, may be used at a variety of applications at a variety of work locations, and which may be used more than once.

### SUMMARY OF THE INVENTION

A conduction welding apparatus and method for bonding abutted thermal plastic tubular end portions is particularly suitable for welding PFA. In a preferred embodiment, a folding weld head embraces the abutted the tubular end portions to be welded, each tubular end portion including a flange spaced from the surfaces to be joined. The weld head includes means for securing the flanges within the weld head and further include bias means. The bias means provide an inward axial bias on the adjoined tubular end portions when the tubular end portions are displaced axially outward from the weld head due to the expansion of the plastic during the weld process. The bias means in a preferred embodiment is substantially inoperative prior to the weld and provides bias, or a substantial increase in bias, when the flanges are displaced due to the expansion of the molten PFA during the weld process. In a preferred embodiment, the securing means comprises a pair of clamps which each attach to and encompass the respective tubular end portions at the end portion flanges. The tubing clamps fit into recesses in the weld head. In such a preferred embodiment the bias means is provided by a spring loaded plate which is deflectable in an axial direction outward from the weld head.

Generally, the insert or mandrel of the present invention comprises at least two portions which are operatively connected to, and longitudinally movable with respect to each other between two different configurations. In the first configuration, the insert is in supporting contact with the interior surfaces of tubing end portions as they are being conjoined, thus facilitating the formation of a beadless weldment. In the second configuration, the insert is manipulated out of supporting contact with the interior surfaces of tubing end portions to be conjoined, thus facilitating removal of the insert from the tubes.

More specifically, the insert comprises a first portion or component and a second portion or component. The first or core portion is generally cylindrical in shape and includes a nose, a tail, and a first circumferential support surface. The nose and the tail of the first core portion are streamlined to facilitate manipulation through non-linear sections of tubing. The preferred material of the first core portion is polyetheretherketone (PEEK) although other similar material may be used. The second or tubing contact portion is also generally cylindrical in shape and includes a skirt and an end wall which are arranged in a generally cup-shaped form. In view of the fact that the preferred plastic tubing material (perfluoroalkoxy (PFA)) used in the semi-conductor and food processing industries has a high melting temperature, the material selected for use in at least the skirt of the second tubing contact portion becomes important. The preferred material of the second tubing contact portion is a high temperature silicon No. 010-611 available from Robinson Rubber Mfg., New Hope, MN. The insert is designed so that in the first conjoining configuration, the first core portion is substantially received within and supportingly contacts the skirt of the second tubing contact portion. When the insert is in the second removal configuration, the first core portion is out of supporting contact with the skirt of the second tubing contact portion. Put another way, the first portion or component and the second portion or component of the insert may be selectively assembled into a support structure to provide support for the tube end portions to be joined or disassembled into a non-support structure to facilitate removal of the insert from the tubing.

Portions of the first core portion and/or the second tubing contact portion of the insert may be provided with friction reducing material, such as polytetrafluoroethylene, to facilitate movement between the first and second configurations and subsequent removal of the insert from the tubing. Such friction reducing material may be integral with the insert portions, or take the form of an additional layer of material, or be applied to predetermined surfaces in predetermined quantities.

In an alternative embodiment, the second tubing contact portion may be used as a stand alone insert. It is envisioned that the application for this embodiment would be useful in situations where tubing is of thin wall construction, and/or is relatively small in diameter.

In another alternative embodiment, the first core portion may be manipulated between a relatively compact form and a relatively expanded form. As the insert is moved from the first conjoining configuration to the second removal configuration, the first core portion and the second tubing contact portion move longitudinally with respect to each other as in the preferred embodiment.

In yet another alternative embodiment, the second tubing contact portion includes an additional coaxial segment which is configured to receive the first core portion as the insert moves from the first conjoining configuration to the second removal configuration.

Although not shown, it is envisioned that the second tubing contact portion may alternatively be formed as a strip of heat-resistant material operatively connected to the first portion and which has been wound about the support surface of the first portion to a suitable thickness. As the first portion is withdrawn, the end of the second portion starts to unwind, thus facilitating removal of the form. It is also envisioned that such a strip may be used over the second tubing contact portion of the preferred embodiment as an insulator, thus extending the working temperature range of the insert.

An object of the preferred embodiment of the invention is to simplify construction of an insert for use in conjoining plastic tubular end portions to form a beadless weldment.

An advantage of the preferred embodiment is that the insert is easy to use.

A feature of the preferred embodiment of the invention is that the first core portion and the second tubing contact portion of the insert are slidingly movable with respect to each other in a longitudinal direction.

Another feature of the preferred embodiment of the invention is that the first core portion and the second tubing contact portion are movable between a first conjoining configuration where the first core portion is in supporting contact with the second tubing contact portion, and a second removal configuration where the first core portion is not in supporting contact with the second tubing contact portion.

Yet another feature of the preferred embodiment of the invention is that one of the portions of the insert is everted when the insert is moved from the first conjoining configuration to the second removal configuration.

A further significant feature of a preferred embodiment of the invention is that the insert can be manipulated through corners such as elbows and "T's."

Thus, an object and feature of the system is to provide a readily adaptable portable or bench top conduction welding apparatus for various sizes of tubing which requires no adjustable of or mechanical manipulation of the tubing supports when different sizes of tubing are welded.

A principal object and advantage of particular embodiments of the invention is that the weld zone is minimized resulting in quicker cycle times.

A feature and advantage of the invention is that the spring-loaded bias is provided only when the tubular end portions expand axially outward.

A further advantage and feature of the invention is that structural anomalies at the weld site such as narrowed wall thickness, flashing, hourglass shape can be minimized or eliminated by the invention.

Further object and advantage of the invention is that the weld head maintains its compact shape while still providing the bias during the weld process.

Additional objects, advantages, and features of the invention will be set forth in part in the description which follows, and in part will become apparent to those skilled in the art upon examination of the following or may be learned by practice of the invention. The objects and advantages of the invention may be realized and attained by means of the instrumentalities and combinations particularly pointed out in the appended claims.

### BRIEF DESCRIPTION OF THE DRAWINGS

FIG. 1 is a perspective view of a weld head in accordance with the invention.
FIG. 2 is a perspective view of a weld head on a bench fixture.
FIG. 3 is a perspective view of a tube clamp in initial engagement with the cylindrical exterior surface of a tubular end portion.
FIG. 3a is an elevational view of a tube clamp.
FIG. 3b is a cross-sectional view taken at line 3b-3b of FIG. 3a illustrating a recess for a flange in the clamp.
FIG. 3c is a cross-sectional view taken at line 3b-3b of FIG. 3a illustrating serrations in the clamp.
FIG. 4 is a tube clamp shown in initial engagement with a flanged tubular end portion of a T-fitting.
FIG. 5 is a perspective view of the tubular end portions and clamps of FIGS. 3 and 4 abutted and with a film wrapped on the juncture. The assembly is ready for insertion into a weld head.
FIG. 6 is a cross-sectional view of a weld head with abutted tubular portions, clamps, and an insert therein.
FIG. 7 is a detailed cross-sectional view showing the interface between the heating portion and the abutted tubular end portions and the juncture.
FIG. 8 is an exploded view of a heater portion half section.
FIG. 8a is a perspective view of a heater portion half section of FIG. 8 assembled.
FIG. 9 is cross-sectional view through the heater portion assembled taken at 9-9 of FIG. 8a.
FIG. 10 is an exploded view of an alternate embodiment of a heater portion half section.
FIG. 11 is a perspective view of the heater portion half section of FIG. 10 assembled.
FIG. 12 is cross-sectional view through the heater portion assembled taken at line 12-12 of FIG. 11.
FIG. 13 is an elevational view of a universal tubing support.
FIG. 14 is a cross-sectional view of a welding apparatus.
FIG. 15 is another cross-sectional view of a welding apparatus.
FIG. 16 is an elevational view of a tubing support and cross sectional view of weld heads showing the adaptive datum level concept.
FIG. 17 is a chart showing the relative power levels corresponding to steady state temperatures plotted against time illustrating a weld cycle.
FIG. 18 is a side elevational view of a further embodiment of a weld head in accordance with the invention.
FIG. 19 is an exploded perspective view of the embodiment of FIG. 18.
FIG. 20 is a cross-sectional view the apparatus of FIG. 18 taken at line 20-20.
FIG. 21 is a detailed figure of a bias means of the embodiments of FIGS. 18-20.
FIG. 22 is a perspective view of the insert of the present invention with the first core portion and second tubing contact portions in a nesting relation, the perspective taken from the exposed end of the first core portion;
FIG. 23 is an exploded, sectional view of the insert showing the first, second and third portions;
FIG. 24 is an exploded, perspective view of the insert, the perspective taken from the exposed end wall of the second tubing contact portion;
FIG. 25 is a sectional view of the insert as it is positioned adjacent the gap defined by unattached tube ends prior to joining, and where the skirt of second tubing contact portion is supported by the first core portion;
FIG. 26 is a sectional view of the insert as it is being withdrawn from the now joined tubes of FIG. 4A, and where the first core portion is in partially supporting contact with the skirt of the second tubing contact portion;
FIG. 27 is a sectional view of the insert in the stage of withdrawal where the first core portion has been brought out of contacting support with the skirt of the second tubing contact portion;
FIG. 28 is a sectional view of an alternative embodiment of the insert, the embodiment comprising the second tubing contact portion only;
FIG. 29 is a sectional view of an alternative embodiment of the insert wherein the first core portion may be manipulated during removal of the insert; and,
FIG. 30 is a sectional view of an alternative embodiment of the insert wherein the first core portion is slidingly movable between two segments of the second tubing contact portion.

It is understood that the above figures are for illustrative purposes only and are not meant to limit the scope of the claimed invention.

### DETAILED SPECIFICATION

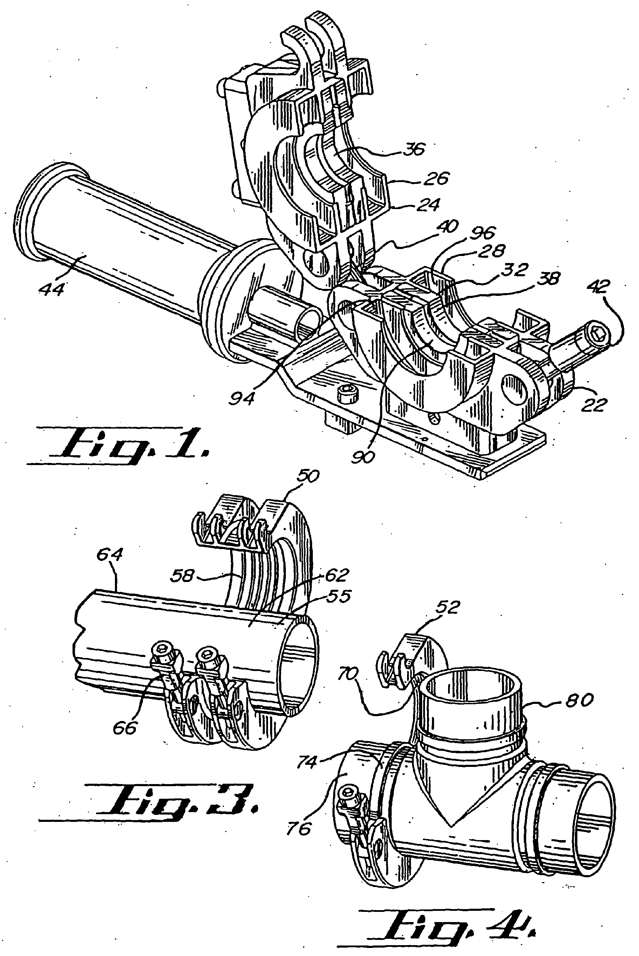

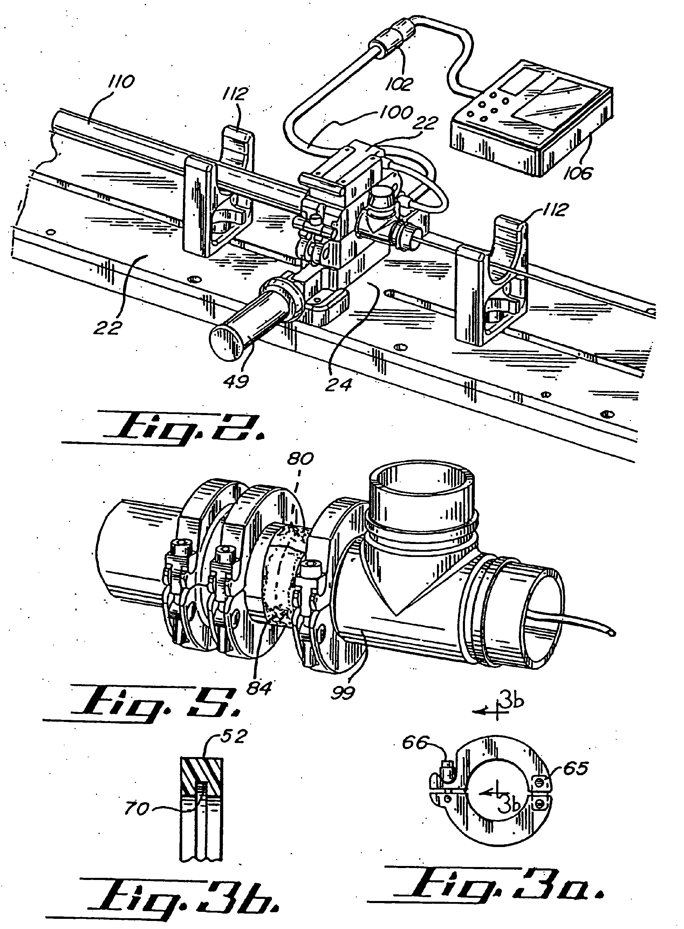

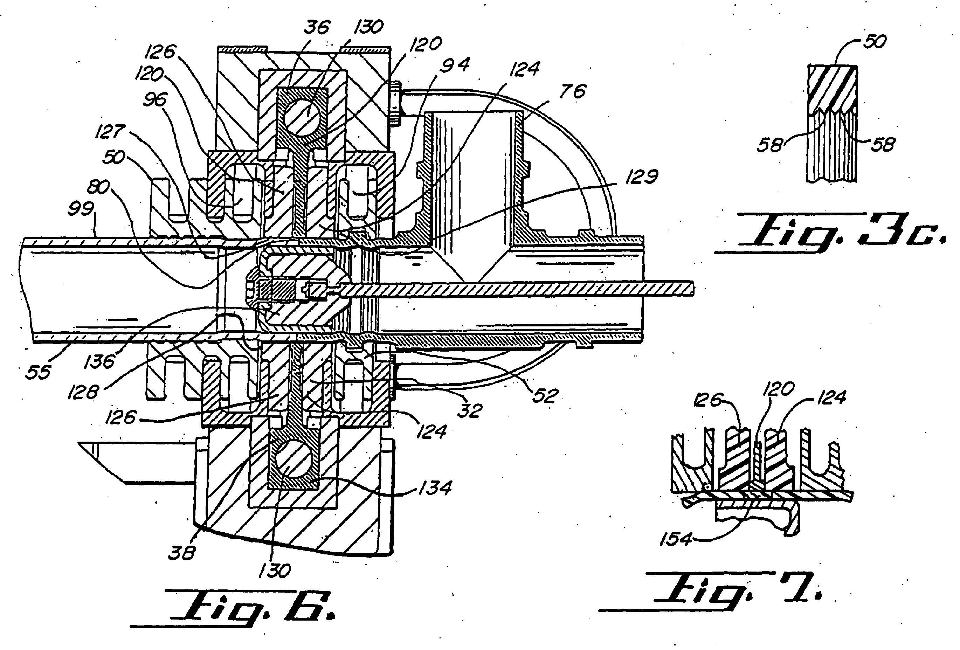

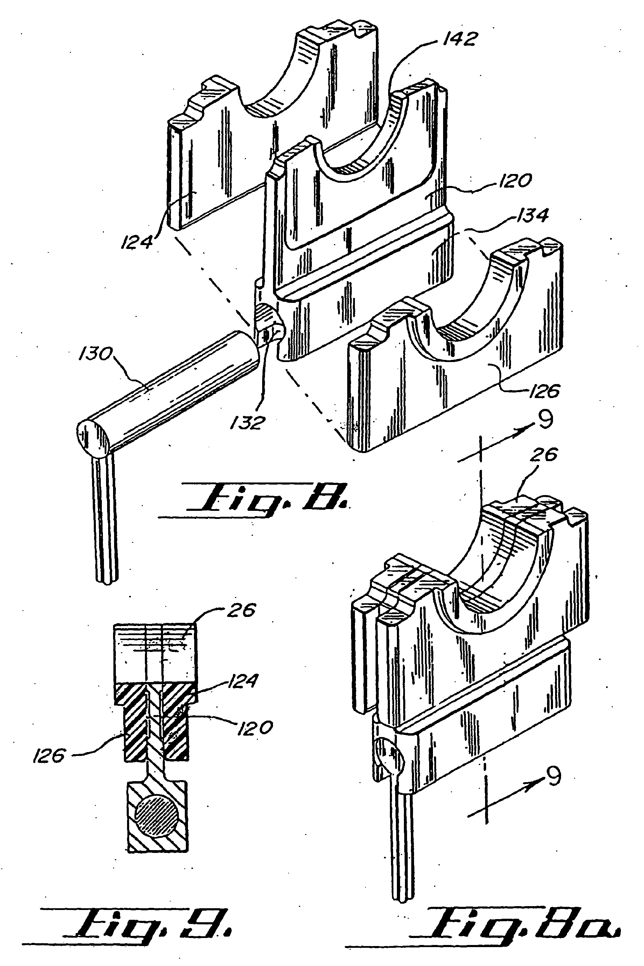

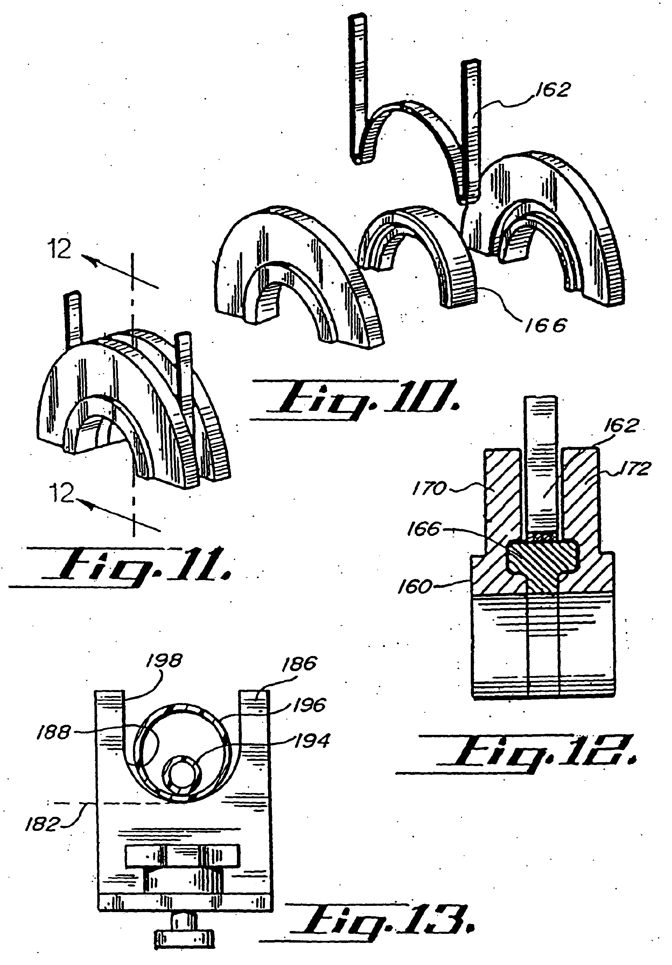

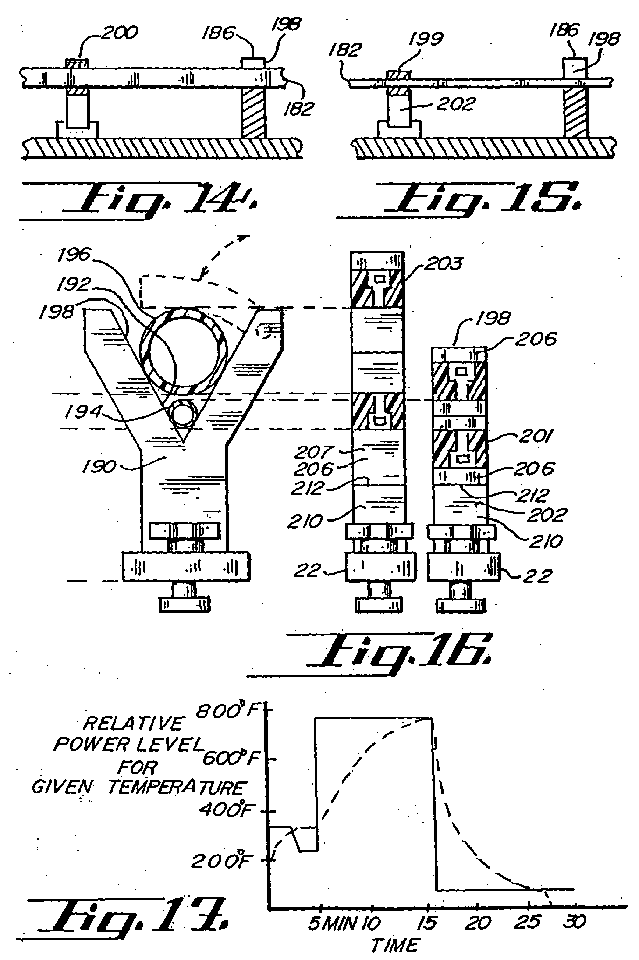

Referring to FIGS. 1 and 2, a weld head 22 in isolation and a weld head 22 in place on a receiving region 25 on a bench top base 23 are illustrated. The weld head 22 is comprised principally of a weld head body 24 with two half body sections 26, 28, a heater portion 32 comprised of two heater portion half sections 36, 38, a hinge 40, a toggle latch 42, and a handle 44.

Referring to FIGS. 3 and 4, a pair of tubular end portions are shown partially engaged by tubing clamps 50, 52. FIGS. 3a, 3b and 3c show further details of the clamps. The tubular end portion 55 of FIG. 3 reflects the end of conventional tubing and the tubing clamp 50 utilizes a plurality of circular serrations 58 for gripping the exterior surface 62 of the tubing 64. The clamp has a hinge 65 and a pair of toggle latches 66 for securing the clamp on the tubular end portion. The clamps as shown may suitably be manufactured from polyetheretherketone (PEEK).

Referring to FIGS. 4 and 3b, a tubing clamp is shown which has a recess 70 sized to engage a flange 74 which is integral with the tubular end portions 76 of certain fittings such as the T-fitting 80 as shown in FIG. 4.

FIG. 5 shows the tubular end portions of FIGS. 3 and 4 abutted together with an insert, not visible in this view, placed at the juncture 80 of the abutted end portions. The juncture is covered with a piece of flexible impervious sheet material 84. Said sheet material may be formed in a elongate strip and secured on the tubular end portions by an adhesive such as cyan acrylic adhesive. The strips of flexible impervious sheet material 84 are in one preferred embodiment comprised of Kapton film type HN with a thickness of .002 inches to .005 inches. Kapton is a registered trademark of DuPont Electronics and is a polyamide film. Other types of pervious sheet material that are tolerant to the weld temperatures may also be quite suitable, for example, stainless steel, aluminum, or nickel foils all appear to be suitable for covering the weld juncture if desired.

Referring to FIGS. 5 and 1, the abutted tubular end portion assembly 99 is inserted in the semi-cylindrical cavity 90 and simultaneously the tubing clamps are received in the slots 94. The upper half body section 26 is closed and clamps down upon the abutted end portions. See FIG. 2. The heater head has a power cord 100 with a connector 102 which connects to a control unit 106 which suitably may control the welding process. The tubular end portion 55 is part of a tubing section 110 which is to be welded to the "T" fitting 80. An adjustable universal tubing support 112 holds the tubing section. The weld head of FIG. 2 is shown hinged away from the handle 49 compared to the alternate configuration of the hinge adjacent the handle in FIG. 1.

Referring to FIG. 6 a cross-sectional view of the weld head and tubular end portions assembly is illustrated along with an insert to prevent the creation of an inner bead. Also illustrated is the placement and relationships of the tubing clamps 50, 52 to the weld head as well as the relationship of the heating portion 32 including the central heated section to the tubular end portions and specifically to the juncture 80. The two heater portions half sections 36, 38 are shown in detailed in FIG. 7 through 9 and comprise central heated section 120 and a pair of secondary isolation sections 124, 126. The heater portion 32 has a cylindrical bore 127 and two axial sides 128, 129. A conventional heater cartridge 130 fits within the recess 132 in the widened portion 134 of each the central heated section. As is evident from FIG. 5 the isolation secondary sections sandwiched are preferably chosen of a material which is of a lower thermal conductivity than the central heated section. This then provides for resistance in the equalization of the temperature of the secondary sections to the central section and thereby creates a sharp temperature gradient and limits the size of the melt zone.

The clamps 50, 52 are illustrated as reflecting inward by way of compressive force in the tubular end portions on each side of the insert 136. This facilitates the proper centering of the insert in the tubular end portion assembly. Moreover, it functions to securely hold the assembly in place.

FIG. 8, 8a, and 9 illustrate a suitable configuration for a heater portion as also illustrated in FIG. 6.

In an ideal embodiment, the central heated section 120 is comprised of machined cooper and may have a plating 142 of monel or similar material. Cooper has been found to adhere somewhat to the melted PFA and a stainless steel coating or monel is to minimize such adhesion. Ideally the isolating secondary sections may be formed such as by machining of high temperature polymers such polyamide. Vespel brand of polyamide available from and manufactured by Boedeker Plastics, Inc. out of Shiner, Texas, is suitable for the secondary sections. Vespel has a thermal conductivity rating of 8.3 BTU-in/ft²-hr-EF.

An alternative suitable material is Celazole PBI polybenzimidazole) available from Boedeker Plastics, Inc. of Shiner, Texas. Celazole has thermal conductively ratings of 2.4 and 2.8 BTU-in/ft²-fr-EF. This compares to the thermal conductivity of cooper of 2,730 BTU/ (ft²) (h) (in) (FE) . These particular plastic materials also provide excellent resistance to sticking to the molten thermoplastics and particularly PBT. Referring to FIG. 7, an illustration of the melt zone 154 is provided. The melt zone is shown centered about the central heated section 120 and extending axially from said heated section to lie adjacent and in contact with the secondary sections 124, 126. The melt zone may vary in size although it has been found that for 1 inch PFA tubing a melt zone of 1/4 inch is suitable. The thickness of the heated section at the bore 127 has been found to suitably be .015 inches thick measure in the axial direction. The melt zone will extend out to the region adjacent the secondary sections. Conventional conduction heating equipment cannot provide isolation of the heat provided to the juncture and control and limit the melt zone to the degree that is possible utilizing a layered heater portion with optimal selection of materials with the highly differentiated thermal conductivities.

In addition to the use of cooper as the central heated section and high temperature plastics as the secondary sections, other materials are suitable. For example, ceramic materials are available that have relatively low thermal conductivities suitable for the secondary sections and higher thermal conductivities suitable for the central section. Referring to FIGS. 10, 11, and 12, a suitable configuration for such a ceramic heater portion 160 is disclosed. In this case, a heater element could be a stainless steel or other metallic wire 162 which is mechanically or otherwise engaged with the central heated section 166 which has the T-shaped cross-section. This heated section 166 is sandwiched intermediate the secondary sections 170, 172. The ceramic sections can be suitably bounded together to form the single unit as shown in FIGS. 11 and 12. Other materials are usable and which would have the similar advantages as discussed above.

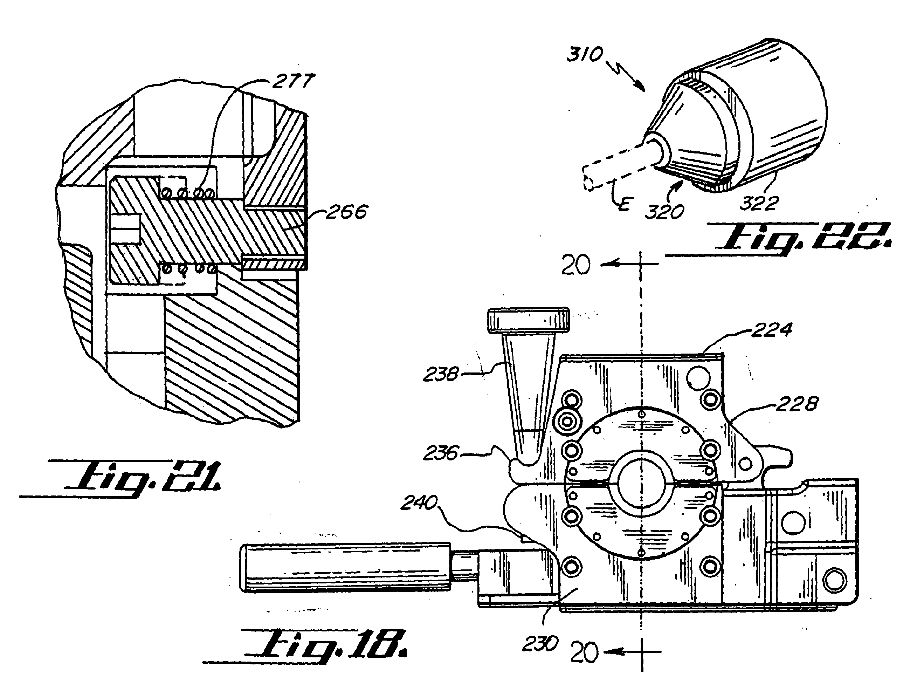

Referring to FIGS. 2, 13, 14, 15, and 16, the aspect of the invention relating to the universal tubing supports and weld heads with tubing datum level adaptation are illustrated. The tubing datum level 182 for differing tubing sizes is either fixed for the tubing support 186 with the U-shaped tubing support surface 188 as illustrated in FIG. 13 or can vary when a tubing support 190 with a V-shaped tubing support surface 192 as illustrated in FIG. 16 is utilized. With the V-shaped support surface the tubing of the first size, the smaller diameter tubing 194, nests farther down in the ?V? with a first datum level 195. The tubing of the second size, the larger diameter tubing 196, is higher and defines a second datum level 197. The U-shaped surface the smaller diameter tubing 194 and the larger diameter tubing 196 will have the same datum level 182. Both the U-shaped and V-shaped surfaces have downwardly converging side surfaces 198.

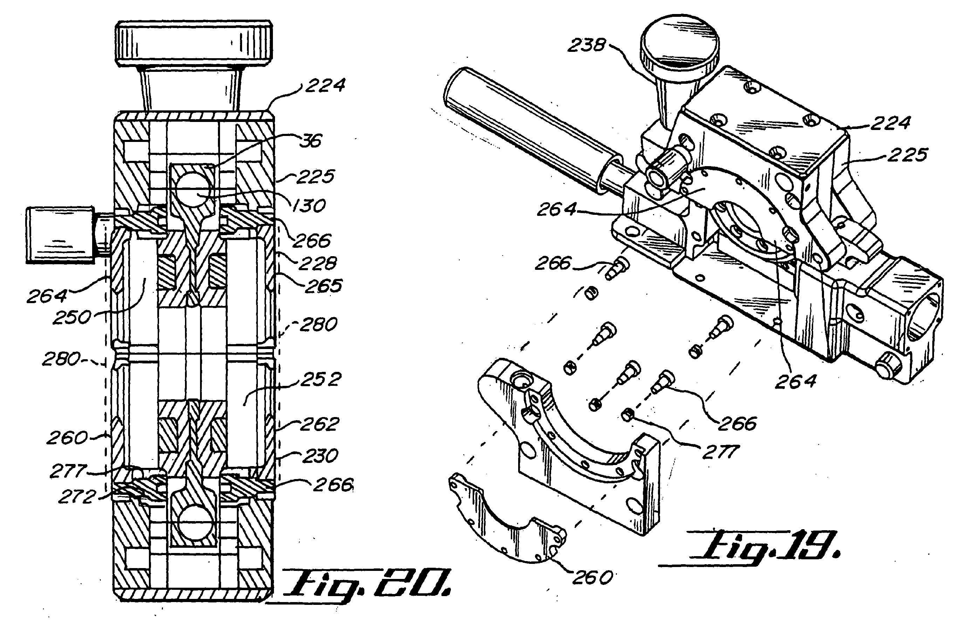

Referring to FIGS. 14 and 15, a first and second weld heads 199, 200 are shown which are adapted for the first and second tubing sizes respectively and the U-shaped universal tubing support 186. Referring to FIG. 16, first and second weld head upper portions 201, 201, are each adapted, for the first and second tubing sizes respectively and the V-shaped universal tubing support 190. For both the V-shaped support of FIG. 16, and the U-shaped support of FIG. 13, the first weld head 199 or the first weld head upper portion 201, for the first tubing size is adapted to the first datum level, that is, the datum level of the smaller tuber such as by having a shorter base 202 than for the larger tubing size. The second weld head 200 and second weld head upper portion 203 are adapted to the second datum level. Other means of adapting a weld head for a specific tubing size to the appropriate datum level for that tubing size will be apparent to those knowledgeable in the art. FIG. 16 illustrates the weld head lower portion 210 which receives the weld head upper portions 201, 203 at location 212. Such tubing supports 186, 194 and weld head components may suitably formed of aluminum or other materials.

Referring to FIGS. 2 and 17, the weld cycle of the weld system is preferably controlled by conventional automated controller means. Such controllers are well known in the art. The heater element may be a conventional heater cartridge. Particularly for welding PFA, in order to minimize environmental effects such as the ambient temperature, the heater element and heated section is initially powered up with sufficient current to approach a first temperature that is substantially below the weld temperature, for example approximately 350 EF. FIG. 17 illustrates a temperature curve corresponding to the power being provided to the heater cartridge. The actual temperature of the heated section will lag behind to reflect the curve of dashed lines. Moreover, the temperature of the heater head body will lag substantially further behind and would due to heat loss would likely never reach the temperature corresponding to a particular power level. Said sufficient power is sustained for a warm up period of approximately two minutes. The temperature is then ramped down to approximately 210 EF for several minutes and then is rapidly ramped up to the weld temperature of approximately 750 EF and is held there for sufficient time to accomplish the weld, perhaps eleven minutes. The temperature is then ramped down to ambient and the joint and weld head are allowed to cool, for perhaps 8 to 10 minutes, before removal of the welded component. These power levels, temperatures, and times have been determined to result in satisfactory welds of PFA.

The minimization of the use of metal in the weld head for the heater portion and the clamps allows the desired temperature to be approached quicker and allows the weld head and weld to cool quicker.

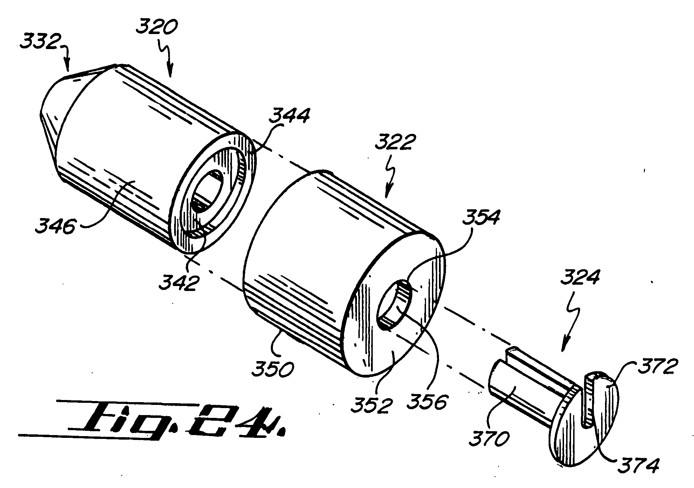

Referring to FIGS. 18-21 a weld head generally indicated with the numeral 224 is illustrated. The weld head 224 has a weld head body 225, a pair of weld head portions configured as weld head halves 228, 230, a pivotal latch 236, a threaded handle 238 which cooperates with a pivotal pin 240 to accomplish the latching and clamping of the two halves of the weld head.

The weld head has recesses 250, 252 for receiving the tubing clamp portions, such as discrete removable clamps as shown in the previous FIGS. 1, 3, and 6. In alternate embodiments, the clamp portions may be generally nonremovable clamp portions affixed to the balance of the weld head. The recesses, the structure defining the recesses, and tubing clamps comprise securing means for gripping the tubular end portions. The structure defining the recess includes outer deflectable plates 260, 262, 264, 265. These deflectable plates are secured in place by a plurality of bolts 266 which are threadably attached to the four plates. The bolts extend through holes 272 in the respective body portions and coiled springs 277 operate to hold the deflectable plates 260 in the initial position shown in FIG. 20. With outward axial pressure provided to the deflectable plates by way of the tubular clamps placed in the recesses said deflectable plates may deflect to the position indicated by the dotted lines labeled with the numeral 280. When the tubular end portions are in their normal position, as shown by the solid lines of FIG. 20, the springs are providing no bias to the abutted tubular end portions. There may be a nominal component of bias provided by positioning of the clamps in the recesses with no deflection. The bias means provided by the springs present a distinct component of bias that takes effect substantially on displacement or deflection of the plates as they extend to the position 280.

At said position the coiled springs are fully compressed and the axial pressure provided on the tubular end portions could be suitably 100 pounds for a 1 inch PFA tubing weld. Such retention provides a high quality weld where the deficiencies of narrowed wall thickness, hour glass shape, and flashing are reduced or eliminated.

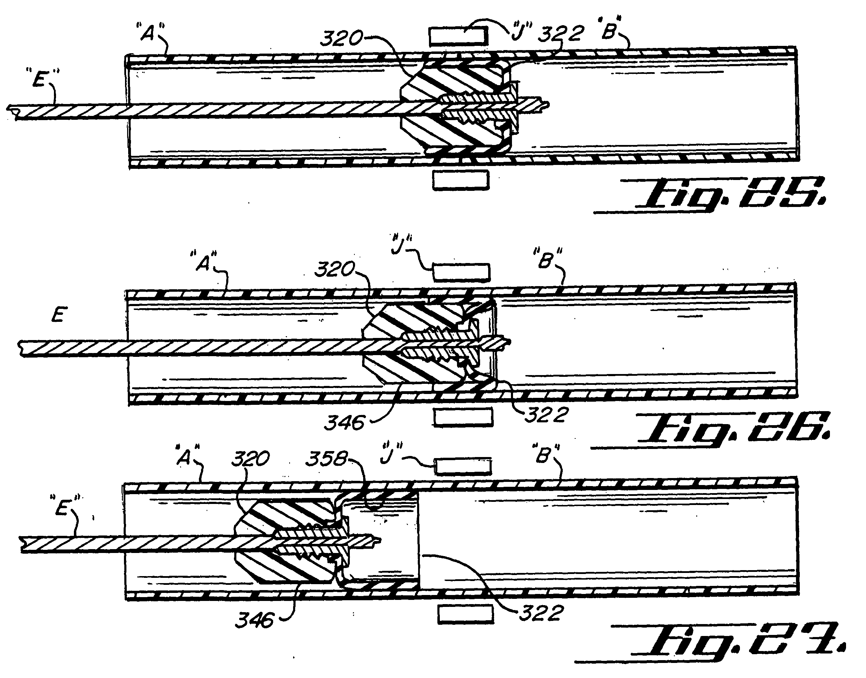

Note that as shown the springs are ?captured? such that they are providing bias only when further compressed from their captured state. See FIG. 21.

Referring to FIG. 22 the insert is shown is generally identified with the numeral 310. As can be seen, the insert 310 includes a first core portion or component 320 and a second tubing contact portion or component 320. Here, the core portion 320 and the tubing contact portion 322 are in a first conjoining or assembled configuration where the core portion or component 320 is in supporting contact with the tubing contact portion or component 322 and the tubing contact portion or component 322 is in supporting contact with plastic tubular end portions (not shown). The insert 310 is connected or otherwise linked to an actuation element "E" which is used to remove the insert 310 from a weldment location. The actuation element "E" may be a string, cable, bowden cable, ribbon, wire, rod, or other device capable of exerting sufficient force to move the first portion or component 320 relative to the second portion or component 322 from the assembled or conjoining configuration as depicted to a disassembled or removal configuration (see FIG. 27) and to then extract the insert from the tubing.

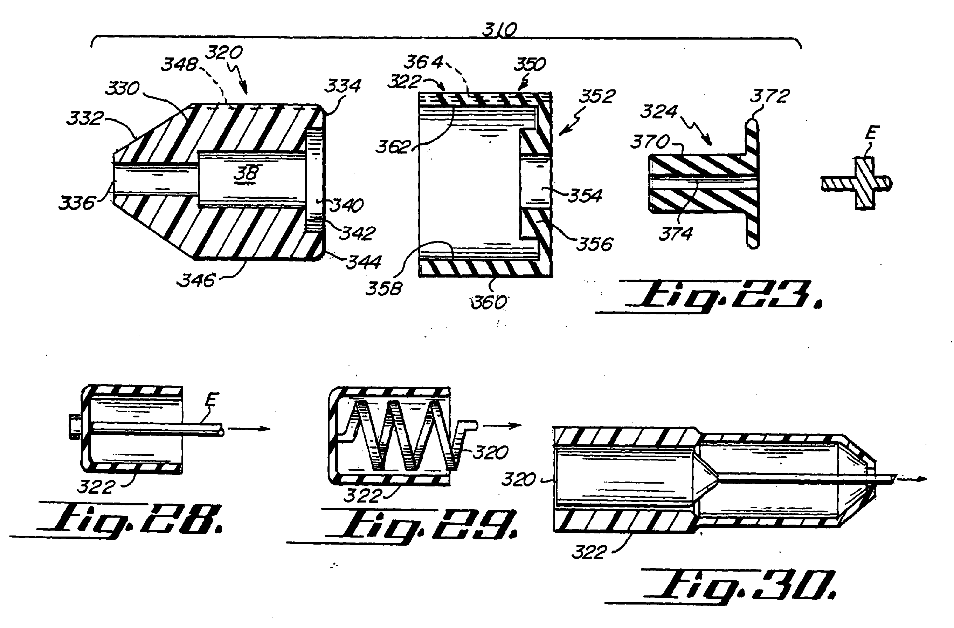

Referring to FIGS. 23 and 24, the first core portion 320 comprises a generally cylindrically shaped body 330 having a nose 332 and a tail 334. The body is provided with an axial through hole having a first aperture 336 having a first diameter and a second aperture 338 having a second diameter, with the first aperture 336 located at the nose end 332 of the body 330 and the second aperture 338 located at the tail end 334 of the body 330. As will become apparent, the through hole is configured to engage a third attachment portion 326 which operatively connects the first core portion 320 to the second tubing contact portion 322. The tail end 334 includes a recess 340 which is sized to receive a bead or flange of the second tubing contact portion. As can be seen in FIG. 24, the recess defines a shoulder 342 and a boss 344. The body also includes a first circumferential surface 346 which may be moved into and out of supporting contact with the second tubing contact portion. Note that the length of the core portion or component 320 is relatively short to enable it to be manipulated through non-linear sections of tubing. Further note that the nose end 332 and the outermost periphery of the boss 344 are tapered and rounded, respectively. This is done to facilitate movement of the core portion or component 320 as it is manipulated through connection sites such as "T"s and "Y"s or through sharp bends such as elbows. As will be appreciated, the first circumferential surface 346 may be provided with a layer of friction reducing material 348 (shown in dashed lines) if desired.

The second tubing contact portion 324 comprises a generally cylindrically shaped skirt 350 with an end wall 352, with the skirt 350 and end wall 352 in the shape of a cup. The end wall 352 includes an aperture 354 and an axially extending bead or flange 356 which is received within the recess 340 of the first core portion 320. The skirt 350 includes a second inwardly facing surface 358 and a third circumferential surface 360, with the second and third surfaces 356, 358 in concentric relation to each other. As with the first circumferential surface 346 of the first core portion 320, the second inwardly facing surface 358 and the third circumferential surface 360 may be provided with a layer of friction reducing material (shown in dashed lines as 362 and 364, respectively) if desired.

The third attachment portion 326 comprises a generally cylindrically shaped body having a shank 370 and a head 372. The third attachment portion 326 also includes a slot 374 which extends along the longitudinal axis thereof. The shank 370 of the third attachment portion 326 is configured to slidingly pass through the aperture 354 in the end wall 352 of the second tubing contact portion 322 and into the second aperture 338 of the through hole where it is operatively engaged. As the third attachment portion 326 engages the second aperture 338, the head 372 engages the end wall 352 of the second tubing contact portion 322 and urges the bead 356 into contact with the shoulder 342 of the recess 340 of the first core portion 320. As can be seen, the actuation element "E" includes a thinned segment which is provided with a thicker segment or anchor. The actuation element "E" may be attached to the insert by feeding it through the nose end 332 of the first core portion and positioning the thinned segment within the slot 374 so that the anchor is adjacent the head 372.

Referring to FIGS. 25, 26, and 27, the operation of the insert is depicted. In FIG. 25, the insert is positioned in a first conjoining configuration. Here, the first core portion 320 and the second tubing contact portion 322 are oriented so that the first circumferential surface of the first core portion 322 is in supporting contact with the second inwardly facing surface of the second tubing contact portion, and the third circumferential surface of the second tubing contact portion is in supporting contact with the interior surface of the tubing ends "A" and "B" to be conjoined. The tubing end portions are conjoined using an appropriate tube end conjoining apparatus "J" and allowed to cool. As depicted in succeeding FIGS. 26 and 27, after cooling, the insert is moved to the second removal configuration and ultimately withdrawn. Note that a tube end conjoining apparatus "J" is depicted for purposes of illustration only. A more complete understanding of the preferred conjoining apparatus may be obtained by referring to disclosures of the previously referenced related patent application: "Beadless Welding Apparatus and Method."

In FIG. 26, the insert is in transition between the first conjoining configuration and a second removal configuration. Here, the first circumferential surface of the first core portion 320 has been partially moved out of supporting contact with the second inwardly facing surface of the second tubing contact portion. As the first core portion 320 moves relative to the second tubing contact portion 322, the second tubing contact portion 322, which is relatively flexible, starts to fold upon itself. This folding is facilitated when the friction between the third circumferential surface and the interior surface of the conjoined tube is greater than the friction between the second inwardly facing surface and the first circumferential surface.

In FIG. 27, the insert is in the second removal configuration and has been moved relative to the weldment (referenced by the tube end conjoining apparatus "J"). As can be seen, the second removal configuration orients the first core portion so that the first circumferential surface 46 is not in supporting contact with the second inwardly facing surface of the second tubing contact portion 322. Note that the second tubing contact portion 322 has continued to fold upon itself so that, in the second removal configuration, it is everted. In this configuration, the positions of the second inwardly facing surface and the third circumferential surface are reversed with the second surface now facing outwardly and the third surface 360 facing inwardly.

Referring to FIG. 28 the insert of the alternative embodiment comprises the tubing contact portion as described in FIGS. 23 and 24 Operation of the tubing contact portion is similar to the operation of the insert as described in FIGS. 25, 26, and 27.

Referring to FIG. 29, the insert of the alternative embodiment comprises a first core portion 320 and a second tubing contact portion 322. This embodiment differs from the preferred embodiment in that the first core portion 320 may be reconfigured as it is being moved from the first conjoining configuration to the second removal configuration. Here, the core is depicted as being a helix which operates thusly. When the insert is in the conjoining configuration, the first core portion is in a compacted form. When the insert is moved to the second removal configuration, the first core portion is reconfigured or manipulated into an expanded form. As the first core portion is reconfigured, the first circumferential surface is brought out of supporting contact with the inwardly facing surface of the second tubing contact surface. Although a helical form is depicted, other forms which can be manipulated between compact and expanded forms may be used.

Referring to FIG. 30, the insert of the alternative embodiment comprises a first core portion and a second tubing contact portion. This embodiment differs from the preferred embodiment in that the second tubing contact portion does not fold upon itself into an everted state. Rather, the second tubing contact portion includes an additional coaxial segment which has an fourth inwardly facing surface and a fifth circumferential surface. Here, the fourth and fifth surfaces are larger than and smaller than the first circumferential surface and the interior surfaces of the tubing to be joined, respectively. As the insert is moved from the first conjoining configuration to the second removal configuration, the first core portion is received in the additional coaxial segment.

Regarding the alternative embodiments of FIGS. 28, 29, and 30, it is understood that such embodiment may include layers of friction reducing material as depicted in FIG. 23.

The present invention may be embodied in other specific forms without departing from the spirit or essential attributes thereof, and it is therefore desired that the present embodiment be considered in all respects as illustrative and not restrictive, reference being made to the appended claims rather than to the foregoing description to indicate the scope of the invention.

## Claims

1. An insert for use in conjoining plastic tubular end portions to form a beadless weldment in combination with a pair of plastic tubular end portions to be joined, the tubular end portions each having an interior surface, the insert being non-inflatable and comprising:
a) a first core portion, generally cylindrical in shape having a longitudinal axis and a first circumferential exterior surface;
b) a second tubing contact portion having a longitudinal axis and comprised of a skirt portion having a second circumferential surface and a third circumferential surface, the skirt coextensive intermediate the second and third circumferential surfaces, the second and third circumferential surfaces in concentric relation to each other, the second tubing contact portion operatively connected to the first core portion and longitudinally movable relative to said first core portion whereby the insert has a first conjoining configuration and a second removal configuration;
wherein when the insert is in the first conjoining configuration and is positioned within the tubular end portions with the end portions abutted for conjoining same, the circumferential exterior surface of the first core portion is in supporting contact with the circumferential surface of the skirt portion, and the third circumferential surface of the skirt portion is facing radially outward and is in supporting contact with the interior surfaces of tubular end portions;
wherein when the insert is in second removal configuration, the first circumferential exterior surface of the first core portion is not in supporting contact with the second inwardly facing surface of the skirt portion is not in supporting contact with the interior surfaces of the tubular end portions and is facing radially inward thereby facilitating withdrawal of the insert from the weldment.

2. The insert of claim 1, the first core portion having a nose, a tail and a longitudinal through hole; the second tubing contact portion comprising an end wall with an aperture; the insert further comprising a third portion, the third portion configured to pass through the aperture in the end wall and engage the first portion at the longitudinal through hole to releasably retain the second tubing contact portion to the first core portion.

3. The insert of claim 2, further comprising an actuation element operatively connected to the third portion for moving the form between the first and second positions.

4. The insert of claim 3, the first core portion further comprising a layer of friction reducing material.

5. The insert of claim 3, the second tubing contact portion further including a layer of friction reducing material.

6. The insert of claim 1, the first core portion further comprising a layer of friction reducing material.

7. The insert of claim 3, the second tubing contact portion further including a layer of friction reducing material.

8. An insert for use in conjoining plastic tubular end portions to form a beadless weldment, in combination with a pair of tubular end portions to be conjoined, the insert comprising:
a) a tubing contact portion having a longitudinal axis, an inwardly circumferential surface and an outwardly facing circumferential surface, the inwardly facing and outwardly facing circumferential surfaces in concentric relation to each other, the tubing contact portion coextensive from the inwardly facing surface to the outwardly facing circumferential surface, the tubing contact portion evertable between a first conjoining configuration and a second removal configuration;
b) the first conjoining configuration orienting the outwardly facing circumferential surface of the tube contact portion is in supporting contact with interior surfaces of tubular end portions to be conjoined;
c) whereby, movement from the first conjoining configuration to the second removal configuration everts the outwardly facing circumferential surface of the tubing contact portion so that it is inwardly facing and not in a supporting relation to the interior surfaces of the tubular end portions to be conjoined, whereby the tubing contact portion may be removed from the tubular end portions.

9. The insert of claim 8, wherein the circumference of the tubing contact portion in the second removal configuration is smaller than the circumference of the tubing contact portion in the first conjoining configuration.

10. The insert of claim 9, the tubing contact portion having an end wall and an actuation element operatively connected thereto, the actuation element facilitating movement between the first conjoining configuration and the second removal configuration.

11. A method of conjoining plastic tubular end portions to form a beadless weldment, the method comprising the steps of:
a) positioning an insert within abutted tubular end portions to be conjoined, the insert comprising:
a first core portion having a longitudinal axis and a first circumferential exterior surface;
a second tubing contact portion comprising a skirt portion in a supporting relation intermediate the first core portion and the interior surfaces of the tubular end portions;
b) heating the junction formed between the tubular end portion and supported by the insert in the first conjoining configuration sufficiently to allow conjoining to occur and forming a conjoined weldment;
c) cooling the conjoined weldment;
d) moving the core portion axially within the conjoined tubular end portions and with respect to the skirt portion, thereby everting the second tubing contact portion; and
e) removing the insert from the tubing.

12. An insert for placement at the juncture of two abutted tubular end portions to be welded in combination with the abutted tubular end portions, the end portions comprising PFA, the insert comprising:
a) a first component having an end wall and a longitudinal axis;
b) a second outer tubing contact portion having a longitudinal axis, the first core portion and second outer tubing contact portion including a single layer skirt portion, the second outer tubing contact portion operatively connected to the first core portion at the end wall and configured to be slidingly assembled in a longitudinal direction and slidingly disassembled whereby the skirt portion is displaced off of the core portion; and
c) an actuation element operatively connected to one of the components;
d) whereby, the assembled insert is placed at a junction of two abutted end portions prior to being welded together, and movement of the actuation element in a longitudinal direction causes the first and second components to slidingly separate and to enable the insert to be removed from the junction.

13. The insert of claim 12, wherein the first component is configured to be substantially received within the second component when the first and second components are assembled together.

14. The insert of claim 13, the second component relatively flexible relative to the first component, the second component able to slidingly fold upon itself as the first and second components are disassembled.

15. The insert of claim 14, wherein the first component comprises polyetheretherketone and the second component comprises high temperature silicon.

16. The insert of claim 12, wherein the assembled insert has an outside diameter which is substantially that of the inside diameter of tubular end portions to be joined, and the outside diameters of the first and second components of the dissembled insert are less than the inside diameter of the tubing.
